# EUROPEAN PATENT SPECIFICATION

(11) **EP 2 771 730 B1**
(45) Date of publication and mention of the grant of the patent: **25.08.2021**
(21) Application number: 12772086.0
(22) Date of filing: 13.09.2012
(51) Int. Cl.: F21V 7/00, F21S 4/28, F21V 5/04, G02B 19/00

(54) **A LENS AND AN ILLUMINATING DEVICE EQUIPPED WITH THE LENS**
LINSE UND BELEUCHTUNGSVORRICHTUNG MIT DER LINSE
LENTILLE ET DISPOSITIF D'ÉCLAIRAGE ÉQUIPÉ DE LA LENTILLE

(30) Priority: 24.10.2011 CN 201110326128
(43) Date of publication of application: 03.09.2014
(73) Proprietor: SITECO GmbH, 83301 Traunreut (DE)
(72) Inventor: ZHANG, Qihui, Shenzhen Guangdong 518053 (CN); HU, Jin, Shenzhen Guangdong 518053 (CN); ZENG, Junhua, Shenzhen Guangdong 518053 (CN); LI, Anmiao, Shenzhen Guangdong 518053 (CN)
(74) Representative: Schmidt, Steffen
(86) International application number: PCT/EP2012/068002
(87) International publication number: WO 2013/060528

(56) References cited:
- CN-U- 201 772 358
- US-A1- 2008 043 466
- US-A1- 2010 053 981
- US-A1- 2010 165 637
- None

## Description

### Technical Field

The present invention relates to a lens and an illuminating device equipped with the lens.

### Background Art

At present, the illuminating devices are widely used in various fields in daily life. For instance, strip illuminating devices are usually installed on edges of furniture, cabinets or other objects to be illuminated. Such illuminating devices are required to provide an elongated light distribution. Thus, a lens is often used as a lamp cover of the strip illuminating device for offsetting emergent light from a light source to a predetermined angle.

In the prior art there exist two types of such lens: one is TIR (total internal reflection) extrusion lens, and the other is lens with column stripes. As to the TIR extrusion lens, the big angle part emergent light is total internally reflected in lens, and the small angle part emergent light is refracted in lens. In this situation, the lens required has a big thickness, resulting in inapplicability of the strip illuminating device having such lens in environments where the thickness or geometrical shape of the illuminating device is strictly restricted. As to the lens with column stripes, it has a shape of convex lens on the whole and has a relatively small thickness compared with the first type of lens, but cannot totally control light of different incident angles according to the optical principle as the column strips thereon are uniformly distributed, and a uniform light distribution pattern long and thin enough can hardly be obtained with such lens.

US 2008/0043466 A1 relates to a lens having a parabolic cross section, collimating the light of an LED like a parabolic reflector. Therein, the light emitted by the LED enters the lens via an entry face with a smooth shape.

US 2010/0165637 A1 shows a lens having a microstructured entry face, wherein the sawteeth forming that microstructure have a constant height.

US 2010/0053981 A1 shows a lamp cover with a plurality of lenses distributing the light by refraction, not by total internal reflection.

CN 201 772 358 U shows a lens having an entry face with two concave regions. Therein, sawteeth forming a microstructure are provided along the arched shapes. However, for each of the arched shapes, the height of the sawteeth is constant from the middle of the arched shape to an edge region.

### Summary of the Invention

The invention is set forth in the appended claims.

It shall be understood that both the above general description and the following detailed description are for illustrative and explanative purposes in order to provide further description of the claimed present invention.

### Brief Description of the Drawings

The accompanying drawings constitute a part of the present Description and are used to provide further understanding of the present invention. Such accompanying drawings illustrate the embodiments of the present invention and are used to describe the principles of the present invention together with the Description. In the accompanying drawings the same components are represented by the same reference numbers. As shown in the drawings:
Fig. 1 is a sectional view of a lens according to the present invention;
Fig. 2 is a detailed view of a second concave region 2 of the lens in Fig. 1;
Fig. 3 is a 3D view of a lens according to the present invention;
Fig. 4 is a optical pathway diagram of a lens according to the present invention; and
Fig. 5 is a light distribution diagram of a lens according to the present invention.

### Detailed Description of the Embodiments

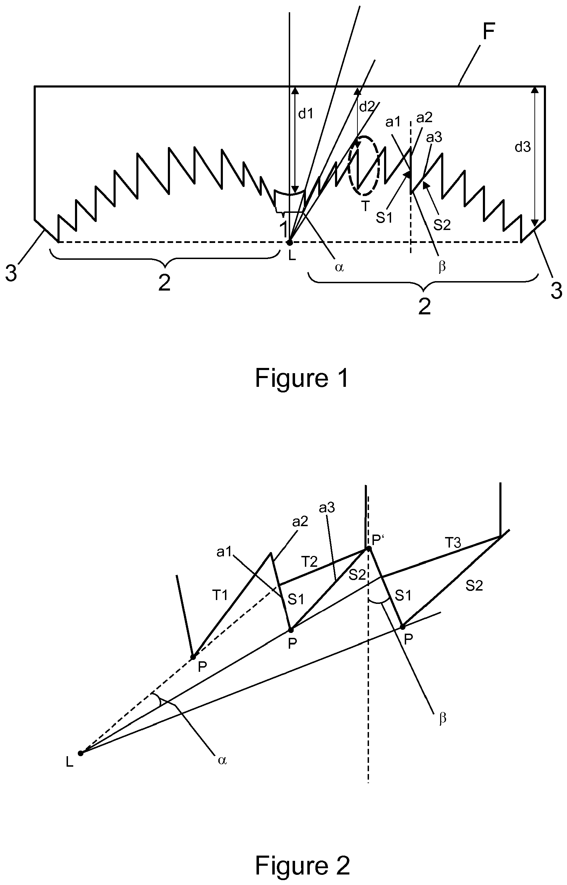

Fig. 1 is a sectional view of a lens according to the present invention, wherein the lens is used for a linear light source L extending inwardly and perpendicularly to the paper surface. The lens according to the present invention comprises a planar outer surface as an emergent surface F and an inner surface facing the light source L. In order to get a uniform elongated light spot in the precondition of assuring a high optical efficiency, a central region of the inner surface of the lens is configured to be a first convex region 1 towards the light source L, second concave regions 2 being symmetrical and recessed away from the light source L are configured to both sides of the first convex region 1, and edge regions 3 of the second concave regions 2, *i.e.,* at least part of edge regions 3 parallel to an extending direction of the light source L, is substantially in the same horizontal plane as the light source L, as a result, a radiation range of the light source L can be generally covered. Thereby, second concave regions 2 each having an arch shape recessed in the middle to be away from the light source L. More advantageously, respective second concave region 2 that mainly receives light from the light source L has a microstructure, i.e., a continuous sawteeth-like structure consisting of a plurality of total internally reflective sawteeth-like units T.

Respective sawteeth-like unit T is defined by a first sawteeth edge S1 and a second sawteeth edge S2 to have an acute-angulate structure with a vertex P and facing the light source L, wherein the first sawteeth edge S1 has an incident surface a1 facing the light source L and a light refraction surface a2 back to the light source L, and the second sawteeth edge S2 has a total internally reflective surface a3 opposite to the light refraction surface a2. The sawteeth-like units T have different shapes, and a length of respective sawteeth-like unit T and inclined angles of the sawteeth edges S1 and S2 can be flexibly designed according to the light distribution required, thus an internal reflection angle of light in the lens is changed, and further an tilted angle between light emitted from the emergent surface F and the emergent surface F is adjusted to allow light from the light source L to pass through the lens to be offset to a predetermined direction.

In conjunction with the detailed view of Fig. 2, it can be seen that in one segment of the second concave region 2, an angle formed by lines connecting two adjacent vertexes P with the light source L is a first angle α, and an angle between the first sawteeth edge S1 and an optical axis of the light source L is a second angle β. The shape of respective sawteeth-like unit T and a trend of a curve of the continuous sawteeth-like structure can be changed by adjusting the first angle α and the second angle β, which also directly determines the pattern of the light distribution. The second angle β may be 2°-5°, and the first angle α may be artificially set. Fig. 2 shows an enlarged view of the second angle β of 5° for showing the sawteeth-like unit T clearly. As second angles β corresponding respective sawteeth-like units T is the same, the first sawteeth edges S1 of respective sawteeth-like units T are parallel to each other. A length of the first sawteeth edge S1 of respective sawteeth-like unit T is determined, for instance, as follow: two beams of light having the first angle α from the light source L rightly can pass through two adjacent vertexes P. Light passing through the vertex P of a first sawteeth-like unit T1 passes through the first sawteeth edge S1 of a second sawteeth-like unit T2 to strike the total internally reflective surface a3 of the second sawteeth edge S2 and forms a reflection point P' thereon. The reflection point P' is also an end point of the first sawteeth edge S1 of a third sawteeth-like unit T3. Consequently, a length of a first sawteeth edge S1 of the third sawteeth-like unit T3 is determined by the vertex P and the end point P'. Besides, it can be seen upon comparison with Fig. 1 that first angles α formed by each two lines connecting two adjacent vertexes P with the light source L are the same. The number of the sawteeth-like units T is equal to a ratio of a light incident range of the light source corresponding to the second concave regions 2 to the first angle α. For example, when the first angle α is 10° and the second concave regions 2 cover a range of 0°-80°, there are eight sawteeth-like units T in respective second concave region 2.

The lens according to the present invention may be configured according to the geometrical relation above depending upon application environments.

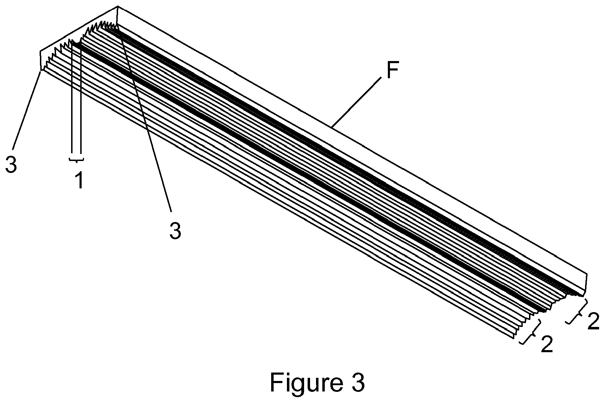

Fig. 3 is a 3D view of the lens according to the present invention. As can be seen from Fig. 3, the lens according to the present invention is an extrusion lens stretched along a direction parallel to an extending direction of the light source L extends. The lens may be made from PC or PMMA.

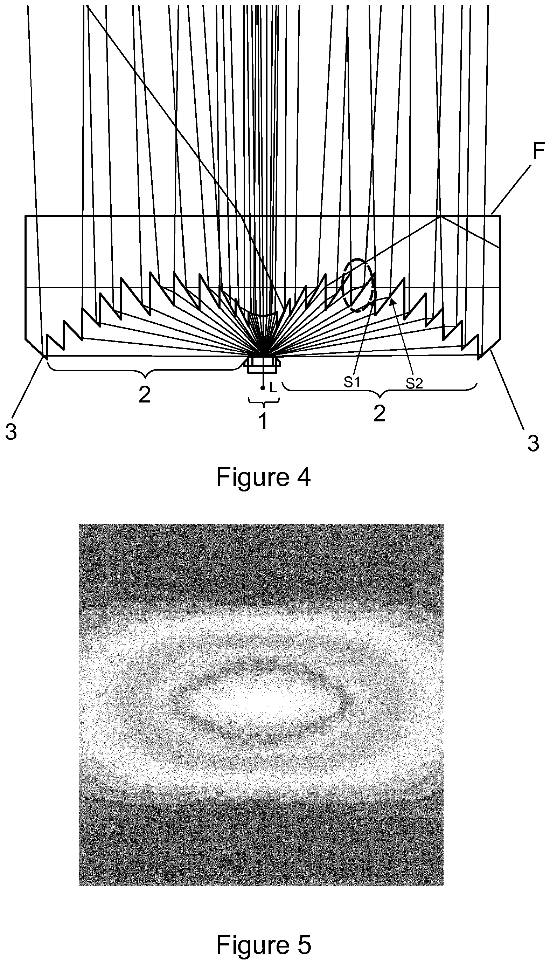

Fig. 4 and Fig. 5 are optical pathway diagram and light distribution diagram of a lens according to the present invention, respectively. As can be seen from Fig. 4, light from the light source L exits uniformly through the lens; and it can be seen from Fig. 5 that a uniform elongated light distribution pattern can be obtained on a target plane, for instance, at a distance of 0.5m from the light source L.

The above is merely preferred embodiments of the present invention but not to limit the present invention.

### List of reference signs

- 1: first convex region
- 2: second concave region
- 3: edge region
- a1: incident surface
- a2: light refraction surface
- a3: total internally reflective surface
- d1: first distance
- d2: second distance
- d3: third distance
- F: emergent surface
- L: light source
- P: vertex
- P': reflection point/end point of first sawteeth edge S1
- S1: first sawteeth edge
- S2: second sawteeth edge
- T: sawteeth-like unit
- T1: first sawteeth-like unit
- T2: second sawteeth-like unit
- T3: third sawteeth-like unit
- α: first angle
- β: second angle

## Claims

1. A lens for a linearly arranged light source (L), comprising an outer surface facing away the light source (L) and an inner surface facing to the light source (L), wherein the outer surface is a planar emergent surface (F) and the inner surface comprises a first convex region (1) and second concave regions (2), symmetrical with respect to the first convex region (1),
wherein, for each of the second concave regions (2), a first distance (d1) from the first convex region (1) to the emergent surface (F) is smaller than a third distance (d3) from a respective edge region (3) of the respective second concave region (2) to the emergent surface (F), and wherein each of the second concave regions (2) has an arched shape recessed in the middle respectively, wherein, for each of the second concave regions (2), the respective arched shape extends between an end adjacent to the first convex region (1) and an end adjacent to the respective edge region (3),
and wherein each of the second concave regions (2) has a micro-structure, namely a continuous sawteeth-like structure comprising a plurality of total internally reflective sawteeth-like units (T), through which light from the light source (L) is refracted and further reflected to the emergent surface (F),
**characterized in that** for each of the second concave regions (2), a first sawteeth edge (S1) and a second sawteeth edge (S2) of the sawteeth-like units (T) increase as a second distance (d2) from the respective second concave region (2) to the emergent surface (F) decreases, so that, for each of the second concave regions (2), a length of the respective first (S1) and second sawteeth edge (S2) is gradually reduced from the middle of the respective arched shape to the respective end adjacent to the first convex region (1),
and wherein for each of the second concave regions (2), the length of the respective first (S1) and second sawteeth edge (S2) is also gradually reduced from the middle of the respective arched shape to the respective end adjacent to the respective edge region (3).

2. The lens according to Claim 1, wherein respective total internally reflective sawteeth-like unit (T) comprises a first sawteeth edge (S1) and a second sawteeth edge (S2) in cross section that define an angle with vertex facing to the light source (L), the first sawteeth edge (S1) form a light incident surface (a1) facing to the light source (L) and form a light refraction surface (a2) facing away the light source (L) , and the second sawteeth edge (S2) form a total internally reflective surface (a3) facing to the light refraction surface (a2).

3. The lens according to Claim 2, wherein two first angles (a) formed between a line connecting one vertex (P) with the light source (L) and lines respectively connecting two vertexes (P) adjacent to said vertex (P) with the light source (L) are equal.

4. The lens according to Claim 3, wherein the number of the total internally reflective sawteeth-like units (T) is equal to a ratio of a light incident range of the light incident to the second concave regions (2) to the first angle (a).

5. The lens according to Claim 4, wherein a second angle β between respective first sawteeth edge (S1) and an optical axis of the light source (L) is 2°-5°.

6. The lens according to one of Claims 1-5, wherein the third distance is 3mm.

7. The lens according to any one of Claims 1-6, wherein the lens is made from PC or PMMA.

8. The lens according to any one of Claims 1-7, wherein the lens is an extrusion lens stretched along a direction parallel to an extending direction of the linear light source (L).

9. An illuminating device comprising a plurality of linearly arranged light sources (L) , wherein the illuminating device is equipped with the lens according to any one of Claims 1-8.

10. The illuminating device according to Claim 9, wherein the linearly arranged light source (L) is a linear LED array.

## Patentansprüche

1. Linse für eine linear angeordnete Lichtquelle (L), mit einer der Lichtquelle (L) abgewandten Außenfläche und einer der Lichtquelle (L) zugewandten Innenfläche, wobei die Außenfläche eine ebene Austrittsfläche (F) ist und die Innenfläche einen ersten konvexen Bereich (1) und zweite konkave Bereiche (2) aufweist, die symmetrisch zu dem ersten konvexen Bereich (1) sind,
wobei für jeden der zweiten konkaven Bereiche (2) ein erster Abstand (d1) von dem ersten konvexen Bereich (1) zu der Austrittsfläche (F) kleiner ist als ein dritter Abstand (d3) von einem jeweiligen Randbereich (3) des jeweiligen zweiten konkaven Bereichs (2) zu der Austrittsfläche (F), und wobei jeder der zweiten konkaven Bereiche (2) eine jeweils in der Mitte vertiefte Bogenform aufweist, wobei sich für jeden der zweiten konkaven Bereiche (2) die jeweilige Bogenform zwischen einem an den ersten konvexen Bereich (1) angrenzenden Ende und einem an den jeweiligen Randbereich (3) angrenzenden Ende erstreckt,
und wobei jeder der zweiten konkaven Bereiche (2) eine Mikrostruktur aufweist, nämlich eine kontinuierliche sägezahnartige Struktur, die eine Vielzahl von innen totalreflektierenden sägezahnartigen Einheiten (T) umfasst, durch die Licht von der Lichtquelle (L) gebrochen und weiter zu der Austrittsfläche (F) reflektiert wird,
**dadurch gekennzeichnet, dass** für jeden der zweiten konkaven Bereiche (2) eine erste Sägezahnkante (S1) und eine zweite Sägezahnkante (S2) der sägezahnartigen Einheiten (T) zunehmen, wenn ein zweiter Abstand (d2) von dem jeweiligen zweiten konkaven Bereich (2) zu der Austrittsfläche (F) abnimmt, so dass sich für jeden der zweiten konkaven Bereiche (2) eine Länge der jeweiligen ersten (S1) und zweiten Sägezahnkante (S2) allmählich von der Mitte der jeweiligen Bogenform zu dem jeweiligen Ende neben dem ersten konvexen Bereich (1) verringert,
und wobei sich für jeden der zweiten konkaven Bereiche (2) die Länge der jeweiligen ersten (S1) und zweiten Sägezahnkante (S2) ebenfalls allmählich von der Mitte der jeweiligen Bogenform zu den jeweiligen Enden neben dem jeweiligen Randbereich (3) verringert.

2. Linse nach Anspruch 1, wobei die jeweilige innere totalreflektierende sägezahnartige Einheit (T) im Querschnitt eine erste Sägezahnkante (S1) und eine zweite Sägezahnkante (S2) aufweist, die einen Winkel mit der der Lichtquelle (L) zugewandten Spitze definieren, die erste Sägezahnkante (S1) eine der Lichtquelle (L) zugewandte Lichteinfallsfläche (a1) und eine der Lichtquelle (L) abgewandte Lichtbrechungsfläche (a2) bildet, und die zweite Sägezahnkante (S2) eine der Lichtbrechungsfläche (a2) zugewandte innere Totalreflexionsfläche (a3) bildet.

3. Linse nach Anspruch 2, wobei zwei erste Winkel (a), die zwischen einer Linie, die einen Scheitelpunkt (P) mit der Lichtquelle (L) verbindet, und Linien, die jeweils zwei dem Scheitelpunkt (P) benachbarte Scheitelpunkte (P) mit der Lichtquelle (L) verbinden, gebildet werden, gleich sind.

4. Linse nach Anspruch 3, wobei die Anzahl der innen totalreflektierenden sägezahnartigen Einheiten (T) gleich einem Verhältnis eines Lichteinfallsbereichs des auf die zweiten konkaven Bereiche (2) einfallenden Lichts zu dem ersten Winkel (a) ist.

5. Linse nach Anspruch 4, wobei ein zweiter Winkel β zwischen der jeweiligen ersten Sägezahnkante (S1) und einer optischen Achse der Lichtquelle (L) 2°-5° beträgt.

6. Linse nach einem der Ansprüche 1-5, wobei der dritte Abstand 3 mm beträgt.

7. Linse nach einem der Ansprüche 1-6, wobei die Linse aus PC oder PMMA gebildet ist.

8. Linse nach einem der Ansprüche 1-7, wobei die Linse eine Extrusionslinse ist, die entlang einer Richtung parallel zu einer Erstreckungsrichtung der linearen Lichtquelle (L) gestreckt ist.

9. Beleuchtungseinrichtung mit einer Vielzahl von linear angeordneten Lichtquellen (L), wobei die Beleuchtungseinrichtung mit der Linse nach einem der Ansprüche 1-8 ausgestattet ist.

10. Beleuchtungseinrichtung nach Anspruch 9, wobei die linear angeordnete Lichtquelle (L) ein lineares LED-Array ist.

## Revendications

1. Lentille destinée à une source de lumière disposée de manière linéaire (L), comprenant une surface externe qui n'est pas tournée vers la source de lumière (L) et une surface interne qui est tournée vers la source de lumière (L), dans laquelle la surface externe est une surface émergente plane (F) et la surface interne comprend une première région convexe (1) et des secondes régions concaves (2), symétriques à la première région convexe (1),
dans laquelle, pour chacune des secondes régions concaves (2), une première distance (d1) entre la première région convexe (1) et la surface émergente (F) est inférieure à une troisième distance (d3) entre une région de bord respective (3) de la seconde région concave respective (2) et la surface émergente (F), et dans laquelle chacune des secondes régions concaves (2) possède une forme arquée renfoncée au milieu, respectivement, dans laquelle, pour chacune des secondes régions concaves (2), la forme arquée respective s'étend entre une extrémité adjacente à la première région convexe (1) et une extrémité adjacente à la région de bord respective (3),
et dans laquelle chacune des secondes régions concaves (2) possède une microstructure, à savoir une structure en dents de scie continue comprenant une pluralité d'unités en dents de scie respectives et réfléchissantes en interne (T), grâce auxquelles la lumière qui provient de la source de lumière (L) est réfractée puis réfléchie vers la surface émergente (F),
**caractérisée en ce que**, pour chacune des secondes régions concaves (2), un premier bord en dents de scie (S1) et un second bord en dents de scie (S2) des unités en dents de scie (T) augmentent au fur et à mesure qu'une seconde distance (d2) entre les secondes régions concaves respectives (2) et la surface émergente (F) diminue, si bien que, pour chacune des secondes régions concaves (2), une longueur du premier (S1) et du second (S2) bords en dents de scie respectifs est progressivement réduite du milieu de la forme arquée respective jusqu'à l'extrémité respective adjacente à la première région convexe (1),
et dans laquelle, pour chacune des secondes régions concaves (2), la longueur du premier (S1) et du second (S2) bords en dents de scie respectifs est également progressivement réduite du milieu de la forme arquée respective jusqu'à l'extrémité respective adjacente à la région de bord respective (3).

2. Lentille selon la revendication 1, dans laquelle les unités en dents de scie respectives et réfléchissantes en interne (T) comprennent un premier bord en dents de scie (S1) et un second bord en dents de scie (S2) en section transversale qui définissent un angle avec un sommet qui est tourné vers la source de lumière (L), le premier bord en dents de scie (S1) formant une surface d'incidence de lumière (a1) tournée vers la source de lumière (L) et formant une surface de réfraction de lumière (a2) qui n'est pas tournée vers la source de lumière (L), et le second bord en dents de scie (S2) formant une surface totale réfléchissante en interne (a3) tournée vers la surface de réfraction de lumière (a2).

3. Lentille selon la revendication 2, dans laquelle deux premiers angles (a) formés entre une ligne qui relie un sommet (P) à la source de lumière (L) et des lignes qui relient respectivement deux sommets (P) adjacents audit sommet (P) à la source de lumière (L) sont identiques.

4. Lentille selon la revendication 3, dans laquelle le nombre d'unités en dents de scie réfléchissantes en interne (T) est égal à un rapport entre une plage d'incidence de lumière de la lumière incidente sur les secondes régions concaves (2) et le premier angle (a).

5. Lentille selon la revendication 4, dans laquelle un second angle β entre le premier bord en dents de scie respectif (S1) et un axe optique de la source de lumière (L) est compris entre 2 et 5°.

6. Lentille selon l'une des revendications 1 à 5, dans laquelle la troisième distance est de 3 mm.

7. Lentille selon l'une quelconque des revendications 1 à 6, dans laquelle la lentille est composée de PC ou de PMMA.

8. Lentille selon l'une quelconque des revendications 1 à 7, dans laquelle la lentille est une lentille d'extrusion étirée dans une direction parallèle à une direction d'extension de la source de lumière linéaire (L).

9. Dispositif d'éclairage comprenant une pluralité de sources de lumière disposées de manière linéaire (L), dans lequel le dispositif d'éclairage est équipé de la lentille selon l'une quelconque des revendications 1 à 8.

10. Dispositif d'éclairage selon la revendication 9, dans lequel la source de lumière disposée de manière linéaire (L) est un réseau de LED linéaires.
